Europäisches Patentamt

European Patent Office

Office européen des brevets

(19)

(11) Veröffentlichungsnummer: **0 212 214 B1**

# (12) EUROPÄISCHE PATENTSCHRIFT

(45) Veröffentlichungstag der Patentschrift: 06.11.91

(21) Anmeldenummer: 86109457.1

(22) Anmeldetag: 10.07.86

(51) Int. Cl.⁵: **C08J 11/06, C08J 3/03, C09D 7/00**

(54) **Verfahren zur Herstellung von Platten oder Formteilen.**

(30) Priorität: 15.07.85 DE 3525254

(43) Veröffentlichungstag der Anmeldung:
04.03.87 Patentblatt 87/10

(45) Bekanntmachung des Hinweises auf die
Patenterteilung:
06.11.91 Patentblatt 91/45

(84) Benannte Vertragsstaaten:
**AT BE CH DE FR GB IT LI NL SE**

(56) Entgegenhaltungen:
DE-A- 3 150 718        FR-A- 1 284 905
GB-A- 1 234 394        GB-A- 2 048 912
GB-A- 2 135 328        US-A- 4 096 061
US-A- 4 366 272

(73) Patentinhaber: **ICI Lacke Farben GmbH**
**Postfach 940 Düsseldorfer Strasse 102**
**W-4010 Hilden/Rhld.(DE)**

(72) Erfinder: **Opitz, Heinz**
**Bleicherweg 1**
**W-4010 Hilden(DE)**
Erfinder: **Landtau, Karl-Ernst**
**Walderstr. 156**
**W-4010 Hilden(DE)**
Erfinder: **Kühhirt, Walter, Dr.**
**Ackerstr. 16**
**W-5630 Remscheid(DE)**

(74) Vertreter: **TER MEER - MÜLLER - STEINMEI-
STER & PARTNER**
**Mauerkircherstrasse 45**
**W-8000 München 80(DE)**

## Beschreibung

Gegenstand der Erfindung ist ein Verfahren zur Herstellung von Platten oder Formteilen durch Aushärten einer aus in noch vernetzbarer Form gesammelten Lackabfällen gebildeten, hitzehärtbare Harze enthaltenden Masse unter Wärme und Druck.

Es ist üblich, die Oberfläche einer Vielzahl von Gegenständen, die aus den verschiedensten Materialien bestehen können, wie Stahl, Kunststoff und Holz. durch eine Oberflächenbehandlung gegen die Einwirkung der Atmosphäre, korrosiver Medien etc. zu schützen und gleichzeitig die Oberflächenqualität und das Aussehen der Gegenstände zu verbessern. Dabei bestimmen der Verwendungszweck, die später auftretenden Beanspruchungen und weitere Faktoren die chemische Zusammensetzung der eingesetzten Oberflächenbehandlungsmaterialien bzw. Lacke und dadurch bedingt die Art der Trocknung. Als Lacke werden beispielsweise Füller, Grundierungen, Decklacke und Klarlacke unterschiedlichster chemischer Zusammensetzung eingesetzt, die als zusätzliche Bestandteile noch Pigmente, Füllstoffe und Korrosionsschutzpigmente enthalten können. Die Lacke können als Harze, beispielweise Alkydharze, ölfreie Polyesterharze, Acrylharze, Epoxidharze, Polyurethanharze etc. sowie organische Lösungsmittel, wie aromatische Lösungsmittel, aliphatische Lösungsmittel, Glykolester, Alkohole und Wasser enthalten, um die gewünschten Eigenschaften der Lackierung zu erfüllen.

Üblicherweise und insbesondere in technischem Maßstab erfolgt die Lackierung der Gegenstände durch Aufspritzen der Lacke in einer Spritzkabine. Hierbei läßt es sich nicht vermeiden, daß ein erheblicher Anteil der aufgespritzten Farbe an dem zu behandelnden Gegenstand vorbeilliegt und den sogenannten Overspray bildet. Durch das angewandte Spritzverfahren, die Art der zu behandelnden Gegenstände und die Form der Aufhängung wird die Menge des Oversprays beeinflußt. Dabei liegt in der Industrie die Materialausnutzung bei der Spritzlackierung im Durchschnitt bei 50 %, während der Rest des Lacks als Overspray in Form von Lösungsmittelemissionen und als Lackschlamm verlorengeht. Daher ist es üblich geworden, den Overspray entweder durch mechanische Einrichtungen zu sammeln und einer Wiederverwertung zuzuführen oder in Wasser niederzuschlagen, mit welchem die Wände der Spritzkabine bespült werden. Dabei enthält das eingesetzte Spritzkabinenwasser abgestimmte Mengen an Flokkungsmitteln, die auf den jeweiligen Lack abgestimmt sind und eine Ausfällung der Lackbestandteile bewirken, die dann in einem Auffangbecken absedimentiert werden.

In dieser Weise fallen in der Industrie unterschiedliche Arten von Lackabfällen, Lackrückständen und insbesondere Lackschlämmen an. In der Automobilindustrie betragen die Grundier und Decklackabfälle jährlich mehrere tausend Tonnen. Die hier anfallenden Decklackabfälle bestehen aus noch reaktiven, härtbaren Bindemitteln auf der Basis von Alkyd-Melaminharzen oder Polyester-Melaminharzen, die noch Farbpigmente und Füllstoffe und auch noch Anteile sogenannter organischer Lösungsmittel und Wasser enthalten.

Ein geringer Anteil dieser Abfälle wird nach der Entfernung des Wassers zu Lacken oder Grundierungen minderer Qualität verarbeitet. Der größte Anteil der Lackabfälle der lackverarbeitenden Industrie muß mit hohem Kostenaufwand auf Sonderdeponien gelagert werden. Es besteht daher ein großes Interesse dafür, diese eigentlich hochwertigen Lackabfälle einer wirtschaftlichen Nutzung zuzuführen und zu hochwertigen Werkstoffen zu verarbeiten, statt sie, wie bisher üblich, in kostenaufwendiger und die Umwelt verschmutzender Weise zu beseitigen.

Es hat nicht an Versuchen gefehlt, die Menge dieser Lackabfälle zu vermindern bzw. diese einer wirtschaftlichen Nutzung zuzuführen.

Die bislang bekannten Maßnahmen bestehen entweder darin, die Menge des Oversprays durch entsprechende Ausgestaltung der Spritzkabinen zu verringern, die über das Spritzkabinenwasser anfallenden Lackschlämme wiederaufzubereiten oder diese in wirtschaftlich nutzbare Produkte umzuwandeln.

So beschreiben die DE-PS 28 23 958 und 29 30 080 mechanische Einrichtungen zum Auffangen und Rückgewinnen der als Overspray auftretenden Lackmaterialien, wobei im ersten Fall das Overspray in Form eines Niederschlags auf einer festen Oberfläche gesammelt und dann abgestreift wird, während die DE-PS 29 30 080 eine Auffangeinrichtung in Form eines Waben aufweisenden Bandes vorsieht. Dabei werden im Fall der DE-PS 28 23 958 die gesammelten Lackrückstände erneut einer Wiederverwendung zugeführt, während im letzteren Fall die gesammelten Lackmaterialien mit einem Lösungsmittel aus dem wabenförmig ausgebildeten Band herausgelöst werden.

Die DE-OS 32 27 227 beschreibt ein Verfahren zur Rückgewinnung von Wasserlack aus dem beim Lackieren mit Naßlacken anfallenden Overspray, wobei auch hier die Spritzkabinenwände mit Wasser berieselt werden, welches im Kreislauf geführte Berieselungswasser über ein rückspülbares Ultrafilter aufbereitet wird. Dieses Verfahren ist bei der elektrophoretischen Verarbeitung von wasserlöslichen Elektrophoreselacken seit Jahren Stand der Technik. Sogenannte Lösungsmittellackabfälle können mit diesem Verfahren aber nicht aufbereitet werden.

Nach der Lehre der US-PS 4 312 759 werden wäßrige Latexlackabfälle dadurch behandelt, daß man die Lackschlämme schnell zum Siedepunkt des enthaltenen Wassers aufheizt, die erhaltene Mischung absitzen läßt und die feste Fraktion zur Landverfüllung, für Bauzwecke oder als Lackbestandteil weiterverwendet.

Nach der Lehre der US-PS 4 383 928 werden die verdünnten wäßrigen Lackabfalldispersionen mit Portlandzement ausgefällt, welcher dann ausgehärtet und zur Landbefestigung verwendet wird.

Die US-PS 4 401 574 beschreibt das Klären von Lackfeststoffe enthaltenden Abwässern von Lackiereinrichtungen durch Ausfällen mit basischem Polyaluminiumchlorid.

Die in der US-PS 4 303 559 beschriebene Verarbeitung von Lackschlämmen besteht darin, den Schlamm zunächst zu vermahlen, die erhaltenen Fragmente zu trocknen und die getrockneten Fragmente zu vermahlen. Die in dieser Weise anfallenden Teilchen können dann beispielsweise zu Platten verpreßt und ausgehärtet werden, die dann zu Isolationszwecken eingesetzt werden können.

Schließlich lehrt die DE-OS 31 50 718 die Aufbereitung von bei der Lackierung anfallenden, noch reaktionsfähigen Lackabfällen zu Werkstoffen, die als Entdröhnungs-bzw. Verkleidungsmaterialien in oder an Kraftfahrzeugen verwendet werden können. Dabei werden die Werkstoffe dadurch erhalten, daß man die Lackabfälle zunächst durch mechanische Behandlung bei niedrigen Temperaturen, beispielsweise durch Walzen, Pressen oder Zentrifugieren weitgehend von den flüssigen Bestandteile, wie Wasser und Lösungsmitteln befreit und dann mit Zusatzstoffen, wie insbesondere schwingungsdämpfenden Materialien in einer Menge von 5 bis 90 Gew.-% vermischt und anschließend aushärtet. Dieses Verfahren ist nicht nur apparativ aufwendig und kostenintensiv, sondern führt auch zu Werkstoffen, die in ihrer flexiblen Handhabung zu wünschen übrig lassen.

Die DE-OS 34 06 749 offenbart ein Verfahren zur Herstellung von Artikeln aus Farbschlamm, bei dem der anfallende Farbschlamm mit 10 bis 70 % eines thermoplastischen oder hitzehärtbaren Harzes und 5 bis 40 % Füllstoffen oder Verstärkungsmaterial vermischt wird. Anschließend wird das Material heißextrudiert, um die Mischung zu homogenisieren und den größten Teil an Wasser und organischen Lösungsmitteln zu entfernen. Das extrudierte Material wird dann im Vakuum konditioniert, worauf das erhaltene Halbfabrikat bei einer Temperatur zwischen 100 und 260°C durch Walzen, Ziehen, Extrudieren und Formen zu Endprodukten verarbeitet wird.

In der DE-OS 33 24 671 ist ein Verfahren beschrieben, nach welchem industrielle Klärschlämme, insbesondere Klärschlämme aus der Dispersionsfarbenproduktion, durch Zusätze von Leimen, Netzmitteln, Verdickungsmitteln, Bindemitteldispersionen, Glasfasern, mineralischen Füllstoffen wie Quarz- und Kalksteinsand, zu Fertigputzmörteln, Fliesenklebern, Bauklebern usw. verarbeitet werden können.

Das in der DE-OS 33 32 457 (sowie der gleichlautenden Europäischen Patentanmeldung EP 0 141 171) beschriebene Verfahren betrifft die Rückgewinnung von Lackmaterial aus dem beim Spritzlackieren entstehenden Overspray mittels einer Auffangvorrichtung, die auf allen Seitenund Bodenflächen mit im Kreislauf geführtem Wasser überspült wird. Das so gewonnene, mit Spülwasser versetzte Overspraymaterial wird anschließend einer Filtrationskammer zugeführt, in welcher das Wasser vom zurückgewonnenen Rohlack getrennt wird. Schließlich durchläuft dieser Rohlack zunächst eine Meßeinheit, sodann eine Aufbereitungseinheit, um danach dem frischen, zu versprühenden Lackmaterial zum gleichen Anwendungszweck wieder beigemischt werden.

Die US-A-4 096 061 beschreibt ein Verfahren zur Rückgewinnung und Wiederverwertung von Lack-Feststoffen aus Abwasser, welche Lack-Feststoffe zur Herstellung von Latex-Grundfarben eingesetzt werden.

Aus der US-A-4 366 272 ist ein Verfahren zur Rückgewinnung von synthetischen Harzemulsionen aus Abwasser bekannt, gemäß dem das Abwasser mit einem Koagulationsmittel versetzt wird, um die darin vorliegende Emulsion des synthetischen Harzes zu brechen, worauf die Harzemulsion von dem Abwasser getrennt und erneut in einem Medium für die Herstellung synthetischer Harzemulsionen dispergiert und wiederverwertet wird, beispielsweise als Klebstoff als Textil-Appreturmittel, als Anstrichmittel und dergleichen.

Die GB-A-1 234 394 beschreibt wäßrige, lufttrocknende Beschichtungsmassen, welche ein bestimmtes nicht ionisches oberflächenaktives Mittel enthalten.

Die FR-A-1 284 905 offenbart eine wäßrige Harzemulsion, die ein bestimmtes Emulgiermittel enthält und für die Herstellung von lufttrocknenden oder hitzehärtenden Anstrichmitteln eingesetzt werden kann.

Die Aufgabe der vorliegenden Erfindung besteht nun darin, ein Verfahren anzugeben, mit dem es gelingt aus in der Lack verarbeitenden Industrie anfallenden Lackabfällen und Lackschlämmen in einfacherweise Platten oder Formteile herzustellen und damit diese Abfälle einer nutzbaren Verwendung zuzuführen.

Diese Aufgabe wird gelöst durch die kennzeichnenden Merkmale des Verfahrens gemäß Hauptanspruch. Die Unteransprüche betreffen besonders bevorzugte Ausführungsformen dieses Erfindungsgegenstandes.

Gegenstand der Erfindung ist daher ein Verfahren zur Herstellung von Platten oder Formteilen durch Aushärten einer aus in noch vernetzbarer Form gesammelten Lackabfällen gebildeten, hitzehärtbare Harze enthaltenden Masse unter Wärme und Druck, welches dadurch gekennzeichnet ist, daß als hitzehärtbare Harze enthaltende Masse eine wäßrige Dispersion eingesetzt wird, die unter Zusatz von oberflächenaktiven Mitteln und unter Einwirkung mechanischer Kräfte aus den Lackabfällen gebildet worden ist.

Bei diesen Lackschlämmen handelt es sich vorzugsweise um die in der Automobilindustrie in großen Mengen anfallenden Füller- und Decklack-Oversprays, die sich in dem Wasser niederschlagen, mit dem üblicherweise die Wände der Spritzkabine bespült werden. Diese Lackabfälle können Abfälle von Lösungsmittelsystemen oder auch von wasserlöslichen Systemen sein und enthalten neben den üblichen Pigmenten, Farbstoffen und sonstigen Lackadditiven als Bindemittel wertvolle vernetzbare und/oder härtbare Harze, wie Alkydharze, Polyesterharze, Epoxidharze, Acrylatharze, Butadien/Styrol-Öle, Melaminharze, Härter, Vernetzungsmittel, Lösemittelreste und Trocknungsmittel.

Die bei dem erfindungsgemäßen Verfahren eingesetzte wäßrige Dispersion, ist vorzugsweise eine zähfließende Emulsion mit einem Feststoffgehalt zwischen 20 und 90 Gew.-%. Durch die einfache Arbeitsweise, die es im Gegensatz zu den Lehren des Standes der Technik nicht notwendig macht, die wertvollen Bestandteile der Lackabfälle in aufwendiger Weise von dem begleitenden Wasser zu trennen oder zu trocknen, wird in dieser Weise eine wirtschaftliche Nutzung der wertvollen Bestandteile der Lackrückstände möglich. Da die erfindungsgemäß eingesetzten stabilen wäßrigen Dispersionen die wertvollen Lackbindemittel in vernetzbarer Form enthalten, können unter Ausnutzung der Eigenschaft der Vernetzbarkeit wertvolle Endprodukte erzeugt werden, wie beispielsweise faserverstärkte und plattenförmige Schall- und Wärmeisolationsmaterialien. Durch die Zugabe von Füllstoffen und Treibmitteln ist es schließlich möglich, streichfähige pastöse Dispersionen zu erhalten, welche nach dem Aufbringen und Aushärten unter Wärmeeinwirkung geschäumte feste und unlösliche Schichten mit hervorragendem Isolationsvermögen ergeben.

Bei dem erfindungsgemäßen Verfahren verwendet man vorzugsweise Lackrückstände oder teilentwässerte Lackabfälle oder Lackschlämme, wie sie in den oben bereits angesprochenen Spritzkabinen der Automobilindustrie anfallen. Diese Lackaßfälle werden in einer Rühreinrichtung mit bevorzugt starker Rührleistung, wie beispielsweise einem Dissolver, mit dem oberflächenaktiven Mittel vermischt, wobei man zum Zwecke der Stabilisierung der erhaltenen Dispersion bzw. Emulsion den pH-Wert der erhaltenen Mischung auf 7,0 bis 10,0, vorzugsweise auf 8,0 bis 8,5, einstellt und Wasser bis zu dem gewünschten Wassergehalt von vorzugsweise 10 bis 60 Gew.-%, noch bevorzugter 20 bis 35 Gew.-% zusetzt.

Bei dem erfindungsgemäßen Verfahren kann man als oberflächenaktives Mittel ein anionisches, kationisches, nichtionisches oder amphoteres oberflächenaktives Mittel bzw. Tensid in einer Menge von 1 bis 10 Gew.-% verwenden. Erfindungsgemäß bevorzugte oberflächenaktive Mittel sind ethoxyliertes Nonylphenol oder Octylphenol mit 4 bis 40 Ethoxygruppen pro Molekül, Calciumligninsulfonat oder mit Ammoniak oder einem Amin neutralisierte langkettige organische Carbonsäuren. Bei den zuletzt genannten oberflächenaktiven Mitteln handelt es sich vorzugsweise um mit wäßrigem Ammoniak, Monoethanolamin oder Triethanolamin neutalisierte Seifen von oxidativ trocknenden Fettsäuren, wie Ölsäure, Leinölfettsäure, Sojaölfettsäure, Tallölfettsäure oder Ricinenfettsäure oder auch Harzsäuren und/oder mit Dicarbonsäuren oder Tricarbonsäuren bzw. deren reaktiven Derivaten, wie Maleinsäureanhydrid, umgesetztes, niedrigviskoses, flüssiges 1,4-cis-Polybutadien. Diese zuletztgenannten bevorzugten oberflächenaktiven Mittel werden mit Vorteil in einer Menge von 2 bis 5 Gew.-% eingesetzt. Hier und auch bei den übrigen Mengenangaben sind die Gewichtsprozente stets auf die erhaltene wäßrige Dispersion bezogen.

Die Bildung der wäßrigen Dispersion erfolgt unter Einwirkung mechanischer Kräfte, die dazu ausreichen, das in den Lackabfällen enthaltene vernetzbare Material zu zerteilen und in eine wäßrige Dispersion bzw. Emulsion umzuwandeln. Hierzu verwendet man an sich bekannte kräftige, schnelllaufende Rühreinrichtungen und/oder Emulgiervorrichtungen, wie beispielsweise einen Dissolver.

Zur Einstellung des pH-Werts verwendet man bei dem erfindungsgemäßen Verfahren mit Vorteil Ammoniak, organische primäre, sekundäre oder tertiäre aliphatische Amine und/ oder Aminoalkohole. Besonders bevorzugt setzt man hierbei Monoethanolamin, Dimethylethanolamin, Triethanolamin oder Triethylamin ein.

Wenn die bei dem erfindungsgemäßen Verfahren eingesetzte wäßrige Dispersion nicht unmittelbar einer Weiterverarbeitung zugeführt wird, ist es zur Steigerung ihrer Lagerstabilität bevorzugt, einen Stabilisator und/oder ein Verdickungsmittel, wie Polyvinylalkohol, einen wasserlöslichen Celluloseester oder Celluloseether, wie Methylcellulose, Natriumcarboxymethylcellulose, Hydroxyethylcellulose oder Celluloseacetat, Casein, Polyvinylpyrrolidon und/oder ein Xanthat in wäßriger Lösung oder in fester Form in die wäßrige Dispersion einzuarbeiten.

In Abhängigkeit von dem angestrebten Anwendungszweck ist es erfindungsgemäß weiterhin bevorzugt, der eingesetzten Dispersion entweder während ihrer Bildung oder danach 0 bis 250 Gew.-%, vorzugsweise 10 bis 80 Gew.-% und noch bevorzugter 20 bis 60 Gew.-% eines Füllstoffs zuzusetzen. Mit Vorteil verwendet man im Hinblick auf die Anwendung der wäßrigen Dispersion zur Herstellung von Schall- und Wärmeisolationsplatten als Füllstoffe solche mit schwingungs- und/oder schalldämpfender Wirkung, wie beispielsweise Vermiculit, Glimmer, Blähton, Gummimehl und/oder feinteiligen Kunststoffschaum, wobei diese Füllstoffe mit einer Teilchengröße von vorzugsweise bis zu 2 mm eingesetzt werden. Auch feinteilige oder zerkleinerte, nicht mehr vernetzbare Lackabfälle oder Lackschlämme, z. B. aus Zweikomponenten-Lacksystemen, können als Füllstoffe Verwendung finden.

Weiterhin ist es möglich, in die wäßrige Dispersion 2 bis 70 Gew.-%, vorzugsweise 20 bis 50 Gew.-% natürlicher und/oder synthetischer, organischer und/oder anorganischer Fasern einzubringen. Bevorzugt verwendet man hierbei Jutefasern, Faserabfälle, Steinwolle, Glasfasern, Holzmehl, Holzspäne und/oder Holzabfälle. In dieser Weise erhält man streichfähige pastöse wäßrige Dispersionen, die als Entdröhnungsmassen eingesetzt und ohne weiteres auf den zu behandelnden Oberflächen ausgehärtet werden können. Natürlich ist es auch möglich, statt Fasern der oben angegebenen Art in die wäßrige Dispersion einzuarbeiten, eine Fasermatte, wie beispielsweise Papier oder Pappe oder auch einen Vliesstoff mit der wäßrigen Dispersion, die zuvor auf die geeignete Viskosität eingestellt worden ist, zu imprägnieren und dann das in dieser Weise imprägnierte Fasermaterial auszuhärten.

Zur Verbesserung der Härtbarkeit der wäßrigen Dispersion bei ihrer Weiterverarbeitung ist es von Vorteil, diese mit 0,1 bis 3 Gew.-%, vorzugsweise 0,5 bis 1,5 Gew.-% eines Mittels zu versetzen, welches die Härtungseigenschaften der in der wäßrigen Dispersion enthaltenen härtbaren Materialien verbessert. Hierzu kann man ein Reaktionsharz, einen Härter, einen Härtungsbeschleuniger und/oder auch einen Katalysator zusetzen. Mit Vorteil verwendet man als Reaktionsharze Melaminharze, Harnstoffharze, Epoxidharze und/oder Carbamidharze, und als Härtungsbeschleuniger bzw. als Katalysatoren gegebenenfalls mit Ammoniak oder einem organischen Amin neutralisierte organische Säuren, wie p-Toluolsulfonsäure, Naphthalinsulfonsäure, Weinsäure, Citronensäure und/oder Maleinsäure oder auch Teilester von Dicarbonsäuren oder Tricarbonsäuren. Schließlich kann man mit Vorteil auch Sikkative, wie sie üblicherweise in der Lackindustrie verwendet werden, zu der wäßrigen Dispersion zugeben.

Zur Verbesserung der mechanischen Eigenschaften der nach dem erfindungsgemäßen verfahren erhaltenen Entdröhnungsplatten, Isolierplatten oder Verkleidungsmaterialien zur Verbesserung der Abrieb- und Steinschlagfestigkeit, der Kälte- und Wärmebeständigkeit, der Flexibilität und anderer Eigenschaften können noch Alkyd-Melaminharze, Polyester-Melaminharze, Acrylatharze, Acrylcopolymerisate, Epoxidharze, Polyisobutylen, Polyvinylether, Polybutadien, Butadien/Styrol-Copolymerisate, Vinylchlorid-Copolymerisate, Polyacrylate, Polyethylen, Bitumen und/oder Steinkohlenteerpech in einer Menge von 0 bis 90 Gew.-%, vorzugsweise 5 bis 50 Gew.-%, in Lösung oder in fester Form, vorzugsweise in Form einer wäßrigen Emulsion oder Dispersion zu der wäßrigen Dispersion zugesetzt werden, und zwar entweder nach ihrer Fertigstellung oder mit Vorteil während ihrer Bildung.

Weiterhin ist es möglich, 0 bis 20 Gew.-% und bevorzugter 0,5 bis 2 Gew.-% eines Weichmachers zuzugeben. Falls die Herstellung von geschäumten Platten angestrebt ist, ist es von Vorteil, der wäßrigen Dispersion ein Treibmittel, wie eine Azodicarbonamidverbindung, eine Sulfohydrazidverbindung und/oder eine Thiatriazolverbindung in einer Menge von 0 bis 20 Gew.-%, bevorzugter von 0,5 bis 2 Gew.-% zuzugeben. Diese Treibmittel zersetzen sich in der Wärme unter Gasfreisetzung, wodurch die wäßrige Dispersion aufgeschäumt wird. Durch eine geeignete Auswahl der Menge des Treibmittels und seiner Zersetzungstemperatur, welche an die Härtungstemperatur der in der erfindungsgemäßen eingesetzten waßrigen Dispersion enthaltenen härtbaren Materialien angepaßt wird, wird es möglich, geschäumte und gehärtete Endprodukte mit gezielten Raumgewichten herzustellen.

Weiterhin kann es in gewissen Fällen erforderlich sein, die in den als Ausgangsmaterial eingesetzten Lackabfällen enthaltenen störenden Materialien zu beseitigen. Beispielsweise können die üblicherweise in dem Spritzkabinenwasser eingesetzten und die Härtung der verwendeten wäßrigen Dispersion störenden Metallionen, wie Aluminiumionen, sequestriert werden, beispielsweise durch einen Phosphatzusatz, wie durch Zugabe eines Polyphosphats oder von Diammoniumphosphat. Diese Phosphatzusätze wirken gleichzeitig als Flammschutzmittel.

Schließlich ist es möglich, den erfindungsgemäß eingesetzten wäßrigen Dispersionen zusätzliche Bestandteile zuzugeben, wie Pigmente, Farbstoffe, Flammschutzmittel, Korrosionsschutzmittel und dergleichen mehr.

Diese erfindungsgemäß hergestellten Platten oder Formteile können in vielfältiger Weise verwendet werden, beispielsweise als

- Entdröhnungsmaterialien und -platten für verschiedene Verwendungszwecke, insbesondere für den Einsatz in der Kraftfahrzeug-Industrie;

- Verkleidungsplatten oder Formteile für die Anwendung in verschiedenartigen Industriegebieten, insbesondere in der Kraftfahrzeugindustrie; und
- Isolierplatten in der Bauindustrie.

Zur Herstellung dieser Isolations- und Verkleidungsplatten werden die erfindungsgemäßen eingesetzten wäßrigen Dispersionen als Bindemittel für die Fasermatten verwendet, die üblicherweise zur Herstellung solcher Platten verwendet werden. Mit Vorteil bestehen diese Fasermatten aus synthetischen Fasern, Naturfasern, Jutefasern, Abfallfasern, Holzspänen, Holzmehl, Holzabfällen, Steinwolle und/oder Glasfasern. Diese Fasern werden entweder der wäßrigen Dispersion zugesetzt oder werden mit dieser imprägniert, worauf der härtbare Anteil der wäßrigen Dispersionen durch Hitzeeinwirkung ausgehärtet wird, wobei es von besonderem Vorteil ist, ein Treibmittel zuzugeben, welches bei dem Aushärtvorgang ein Aufschäumen des Bindemittels bewirkt. Natürlich ist es auch möglich, die genannten Platten oder Formteile durch Verpressen unter Wärmeeinwirkung herzustellen. Preßzeiten von 2 bis 15 Minuten und Temperaturen von 160 bis 200°C bei Preßdrücken von 6 bis 10 bar ergeben gute Ergebnisse.

Die folgenden Beispiele dienen der weiteren Erläuterung der Erfindung.

**Beispiel 1**

Man vermischt 80 Gew.-% eines als Overspray anfallenden teilentwässerten Füllerabfalls mit einem Feststoffanteil von 50 Gew.-% mit 2 Gew.-% ethoxyliertem Nonylphenol mit 10 Ethoxygruppen pro Molekül unter kräftigem Rühren in einem Dissolver. Dann gibt man unter Rühren 2 Gew.-% Hexamethylmelaminharz und 16 Gew.-% einer 5 gew.-%-igen wäßrigen Polyvinylalkohollösung zu, stellt den pH-Wert der erhaltenen Mischung mit einer wäßrigen 25 %-igen Ammoniaklösung auf einen Wert von 8,5 ein und erhält eine zähfließende Emulsion mit einem Feststoffgehalt von 44,3 Gew.-%, die mit Wasser verdünnt werden kann.

**Beispiel 2**

Man legt in einem Rührgefäß 70 Gew.-% eines teilentwässerten Decklackabfalls mit einem Feststoffanteil von 50 %, wie er üblicherweise in der Automobilindustrie anfällt, vor und gibt unter Rühren 3 Gew.-% Leinölfettsäure zu. Dann stellt man den pH-Wert des Materials unter Rühren mit Monoethanolamin auf 8,5 ein und gibt unter dem laufenden Dissolver 25 Gew.-% Wasser langsam zu dem Material zu. Man erhält eine wäßrige Emulsion, der 2 Gew.-% Hexamethoxymethylmelaminharz zur Einstellung der Vernetzung zugesetzt werden. Es entsteht eine wäßrige Emulsion mit einem Feststoffanteil von 40 %, die ohne weiteres mit Wasser verdünnt werden kann.

**Beispiel 3**

Man beschickt einen Rührbehälter mit 65 Gew.-% Decklackabfall und gibt unter Rühren 3 Gew.-% Calciumligninsulfonat, wie es als Abfallprodukt bei der Papierfabrikation anfällt, zu. Dann trägt man unter dem laufenden Dissolver 32 Gew.-% ammoniakalisches Wasser mit einem pH-Wert von 8,5 langsam ein. Es entsteht eine wäßrige, mit Wasser verdünnbare Emulsion.

**Beispiel 4**

Man beschickt einen Rührbehälter mit 60 Gew.-% Lackschlamm von einem Füller mit 50 % Feststoffgehalt aus der Automobilindustrie und setzt diesem unter Rühren 22 Gew.-% Wasser zu, welches mit Dimethylethanolamin auf einen pH-Wert von 8,5 eingestellt wurde. Dieser Mischung werden sodann unter Rühren 2 Gew.-% Hexamethoxymethylmelamin zugesetzt. Nach dem Zusatz von 16 Gew.-% einer marktüblichen selbstvernetzenden Acrylat-Copolymer-Dispersion mit einem Festkörpergehalt von 50 % unter ständigem Rühren erhält man eine stabile wäßrige Dispersion, die für die Herstellung von Preßplatten geeignet ist.

**Beispiel 5**

Man vermischt 40 Gew.-% der nach Beispiel 1 erhaltenen wäßrigen Emulsion mit 60 Gew.-% Wasser. Nach Zugabe von 1 Gew.-% einer 50 gew.-%-igen Lösung von p-Toluolsulfonsäure in Wasser wird diese Mischung gleichmäßig in gewünschter Schichtdicke auf ein Filtersieb verteilt und im Warmluftstrom vorgetrocknet und anschließend in einer Hydraulikpresse 10 Minuten lang bei einer Temperatur von 120°C und einem Preßdruck von 20 bar ausgehärtet. Man erhält eine ausgehärtete, feste Platte mit ausgezeichneten Isolationseigenschaften.

**Beispiel 6**

600 ml der gemäß Beispiel 4 hergestellten Dispersion und 600 ml Wasser werden unter Rühren miteinander vermischt.

Dann werden 100 g Textilfaser homogen eingerührt. Diese Mischung wird in gewünschter Schichtdicke auf einem Filtertuch aufgebracht, leicht abgepreßt und der so erhaltene weiche Preßling im Warmluftstrom angetrocknet. Anschließend erfolgt in der Hydraulikpresse innerhalb von 2 Minuten bei einer Temperatur von 180° C und einem Preßdruck von 10 bar die Aushärtung des Preßlings. Man erhält auf diese Weise Preßplatten mit hoher Biegefestigkeit und sehr guter Feuchtigkeitsbeständigkeit.

**Patentansprüche**

1. Verfahren zur Herstellung von Platten oder Formteilen durch Aushärten einer aus in noch vernetzbarer Form gesammelten Lackabfällen gebildeten hitzhärtbare Harze enthaltenden Masse unter Wärme und Druck, **dadurch gekennzeichnet,** daß als Hitzhärtbare Harze enthaltende Masse eine wäßrige Dispersion eingesetzt wird, die unter Zusatz von oberflächenaktiven Mitteln und unter Einwirkung mechanischer Kräfte aus den Lackabfällen gebildet worden ist.

2. Verfahren nach Anspruch 1, **dadurch gekennzeichnet,** daß als Lackabfälle Lackrückstände oder teilentwässerte Lackabfälle oder Lackschlämme verwendet werden.

3. Verfahren nach einem der vorhergehenden Ansprüche, **dadurch gekennzeichnet,** daß die Lackabfälle unter Rühren mit dem oberflächenaktiven Mittel vermischt werden, der pH-Wert der erhaltenen Mischung auf 7,0 bis 10,0 vorzugsweise auf 8,0 bis 8,5, eingestellt wird und Wasser unter Bildung einerstabilen wäßrigen Emulsion bis zu einem Wassergehalt von 10 bis 60 Gew.-%. vorzugsweise 20 bis 35 Gew.-%, zugesetzt wird.

4. Verfahren nach den Ansprüchen 1 bis 3, **dadurch gekennzeichnet,** daß als oberflächenaktives Mittel ein anionisches, kationisches, nichtionisches oder amphoteres oberflächenaktives Mittel in einer Menge von 1 bis 10 Gew.-% verwendet wird.

5. Verfahren nach Anspruch 4, **dadurch gekennzeichnet,** daß als oberflächenaktives Mittel 2 bis 5 Gew.-% ethoxyliertes Nonylphenol oder Octylphenol mit 4 bis zu 40 Ethoxygruppen pro Molekül eingesetzt werden.

6. Verfahren nach Anspruch 4, **dadurch gekennzeichnet,** daß als oberflächenaktives Mittel 2 bis 5 Gew.-% Calcium- und/oder Magnesiumligninsulfonat eingesetzt werden.

7. Verfahren nach Anspruch 4, **dadurch gekennzeichnet,** daß als oberflächenaktives Mittel 2 bis 5 Gew.-% mit Ammoniak oder einem Amin neutralisierte langkettige organische Carbonsäuren eingesetzt werden.

8. Verfahren nach Anspruch 7, **dadurch gekennzeichnet,** daß als langkettige Carbonsäuren oxidativ trocknende Fettsäuren, wie Ölsäure, Leinölfettsäure, Sojaölfettsäure, Tallölfettsäure, Harzsäure oder Ricinenfettsäure und/oder mit Dicarbonsäuren oder Tricarbonsäuren umgesetztes Polybutadien eingesetzt werden, die mit wäßrigem Ammoniak, Monoethanolamin oder Triethanolamin neutralisiert worden sind.

9. Verfahren nach Anspruch 3, **dadurch gekennzeichnet,** daß zur Einstellung des pH-Werts wäßriges Ammoniak, organische primäre, sekundäre oder tertiäre aliphatische Amine und/oder Aminoalkohole eingesetzt werden.

10. Verfahren nach Anspruch 9, **dadurch gekennzeichnet,** daß als Aminoalkohole Monoethanolamin, Dimethylethanolamin oder Triethanolamin und als organisches Amin Triethylamin eingesetzt werden.

11. Verfahren nach einem der vorgehenden Ansprüche, **dadurch gekennzeichnet.,** daß während oder nach der Bildung der wäßrigen Dispersion ein Stabilisator, wie Polyvinylalkohol, ein wasserlöslicher Celluloseester oder Celluloseether, wie Methylcellulose, Natriumcarboxymethylcellulose, Hydroxyethylcellulose oder Celluloseacetat, Casein, Polyvinylpyrrolidon und/oder ein Xanthat in wäßriger Lösung oder in fester Form zugesetzt wird.

12. Verfahren nach einem der vorhergehenden Ansprüche, **dadurch gekennzeichnet.,** daß während oder nach der Bildung der wäßrigen Dispersion 0 bis 250 Gew.-% eines Füllstoffs zugesetzt werden.

13. Verfahren nach Anspruch 12, **dadurch gekennzeichnet,** daß ein Füllstoff mit schwingungs- und/oder schalldampfender Wirkung in einer Menge von 10 bis 80 Gew.-%, vorzugsweise 20 bis 60 Gew.-%, eingesetzt wird.

14. Verfahren nach Anspruch 13, **dadurch gekennzeichnet,** daß als schwingungs- und/oder schalldämpfender Füllstoff Vermiculit, Glimmer, Blähton, Gummimehl und/oder feinteiliger Kunststoffschaum mit einer Teilchengröße von bis zu 2 mm verwendet wird.

15. Verfahren nach einem der vorhergehenden Ansprüche, **dadurch gekennzeichnet,** daß während oder nach der Bildung der wäßrigen Dispersion 2 bis 70 Gew.-%` vorzugsweise 30 bis 50 Gew.-%` natürlicher und/oder synthetischer, organischer und/oder anorganischer Fasern zugesetzt werden.

16. Verfahren nach Anspruch 15, **dadurch gekennzeichnet,** daß als natürliche und/oder synthetische, organische und/oder anorganische Fasern Jutefasern, Faserabfälle, Steinwolle, Glasfasern, Holzmehl, Holzspäne und/oder Holzabfälle verwendet werden.

17. Verfahren nach einem der vorhergehenden Ansprüche, **dadurch gekennzeichnet,** daß während oder nach der Bildung der wäßrigen Dispersion 0,1 bis 3 Gew.-%, vorzugsweise 0.5 bis 1,5 Gew.-% eines Mittels zur Verbesserung der Härtbarkeit der wäßrigen Dispersion zugesetzt werden.

18. Verfahren nach Anspruch 17, **dadurch gekennzeichnet,** daß als Mittel zur Verbesserung der Härtbarkeit der wäßrigen Dispersion ein Reaktionsharz ein Härter, ein Härtungsbeschleuniger und/oder ein Katalysator zugesetzt wird.

19. Verfahren nach Anspruch 18, **dadurch gekennzeichnet,** daß als Reaktionsharz ein Melaminharz, ein Harnstoffharz,ein Epoxidharz oder ein Carbamidharz, und als Härtungsbeschleuniger bzw. als Katalysator eine gegebenenfalls mit Ammoniak oder einem organischen Amin neutralisierte organische Säure, wie p-Toluolsulfonsäure, Naphthalinsulfonsäure, Weinsäure, Citronensäure und/oder Maleinsäure oder Sikkative, Teilester von Dicarbonsäuren und Tricarbonsäuren verwendet werden.

20. Verfahren nach einem der vorhergehenden Ansprüche, **dadurch gekennzeichnet,** daß während oder nach der Bildung der wäßrigen Dispersion 0 bis 90 Gew.-%, vorzugsweise 5 bis 50 Gew.-%, eines Alkyd-Melaminharzes, eines Polyester-Melaminharzes, eines Acrylatharzes, eines Acrylcopolymerisats, eines Epoxidharzes, eines Polyisobutylens, eines Polyvinylethers, eines Polybutadiens, eines Butadien/Styrol- Copolymerisats, eines Vinylchlorid-Copolymerisats, eines Polyacrylats, eines Polyethylens, von Bitumen oder von Steinkohlenteerpech in Lösung oder fester Form oder vorzugsweise in Form einer wäßrigen Emulsion oder Dispersion zugesetzt werden.

21. Verfahren nach einem der vorhergehenden Ansprüche, **dadurch gekennzeichnet,** daß während oder nach der Bildung der wäßrigen Dispersion 0 bis 20 Gew.-%, vorzugsweise 0,5 bis 2 Gew.-%, eines Treibmittels und/oder eines Weichmachers zugesetzt werden.

22. Verfahren nach Anspruch 21, **dadurch gekennzeichnet,** daß als Treibmittel eine Azodicarbonamidverbindung, eine Sulfohydrazidverbindung und/oder eine Thiatriazolverbindung eingesetzt wird.

23. Verfahren nach mindestens einem der vorhergehenden Ansprüche, **dadurch gekennzeichnet,** daß die wäßrige Dispersion auf einem Filtersieb oder Filtertuch verteilt, vorgetrocknet und anschließend in der Hitze unter Druck verpreßt wird.

24. Verfahren nach mindestens einem der vorhergehenden Ansprüche, **dadurch gekennzeichnet,** daß eine Fasermatte mit der gegebenenfalls mit Füllstoffen, Zusatzstoffen und/oder Fasern versetzten wäßrigen Dispersion imprägniert und anschließend unter Wärme und Druck ausgehärtet wird.

**Claims**

1. Process for the production of boards or shaped articles by curing, under heat and pressure, a substance which is formed from paint waste collected in a still cross-linkable form and contains heat-hardenable resins, characterised in that as a substance containing heat-hardenable resins there is used an aqueous dispersion which has been formed from paint waste by addition of surface-active agents and by the action of mechanical forces.

2. Process according to claim 1, characterised in that paint residues or partially dewatered paint waste or paint sludge are used as paint waste.

3. Process according to one of the preceding claims, characterised in that the paint waste is mixed with the surface-active agent while stirring, the pH of the mixture obtained in adjusted to 7.0 to 10.0, preferably 8.0 to 8.5, and water is added to form a stable aqueous emulsion up to a water content of 10 to 60% by weight, preferably 20 to 35% by weight.

4. Process according to claims 1 to 3, characterised in that an anionic, cationic, nonionic or amphoteric surface-active agent is used in a quantity of 1 to 10% by weight as a surface-active agent.

5. Process according to claim 4, characterised in that 2 to 5% by weight of ethoxylated nonylphenol or octylphenol with 4 to 40 ethoxy groups per molecule are used as a surface-active agent.

6. Process according to claim 4, characterised in that 2 to 5% by weight of calcium and/or magnesium ligninsulphonate are used as a surface-active agent.

7. Process according to claim 4, characterised in that 2 to 5% by weight of long-chained organic carboxylic acids neutralized with ammonia or an amine are used as a surface-active agent.

8. Process according to claim 7, characterised in that as long-chained carboxylic acids there are used fatty acids such as oleic acid, fatty acid of linseed oil, fatty acid of soya oil, fatty acid of tall oil, resinic acid or dehydrated castor acid, drying by oxidation, and/or polybutadiene reacted with dicarboxylic acids or tricarboxylic acids, which have been neutralized with aqueous ammonia, monoethanolamine or triethanolamine.

9. Process according to claim 3, characterised in that organic primary, secondary or tertiary aliphatic amines and/or amino alcohols are used to adjust the pH of aqueous ammonia.

10. Process according to claim 9, characterised in that monoethanolamine, dimethylethanolamine or triethanolamine are used as amino alcohols and triethyl amine as organic amine.

11. Process according to one of the preceding claims, characterised in that a stabilizer such as polyvinylalcohol, a water-soluble cellulose ester or cellulose ether such as methylcellulose, sodium carboxymethyl cellulose, hydroxyethyl cellulose or cellulose acetate, casein, polyvinylpyrrolidone and/or a xanthate is added in aqueous solution or in solid form during or after the formation of the aqueous dispersion.

12. Process according to one of the preceding claims, characterised in that 0 to 250% by weight of a filler are added during or after formation of the aqueous dispersion.

13. Process according to claim 12, characterised in that a filler with oscillation-damping and/or sound damping effect is used in a quantity of 10 to 80% by weight, preferably 20 to 60% by weight.

14. Process according to claim 13, characterised in that vermiculite, mica, light expanded clay aggregate, powdered rubber and/or finely divided plastics foam having a particle size of up to 2 mm is used as oscillation-damping and/or sound-damping filler.

15. Process according to one of the preceding claims, characterised in that 2 to 70% by weight, preferably 30 to 50% by weight of natural and/or synthetic, organic and/or inorganic fibres are added during or after formation of the aqueous dispersion.

16. Process according to claim 15, characterised in that jute fibres, fibre waste, rockwool, glass fibres, sawdust, wood shavings and/or wood waste are used as natural and/or synthetic, organic and/or inorganic fibres.

17. Process according to one of the preceding claims, characterised in that 0,1 to 3% by weight, preferably 0.5 to 1.5% by weight of an agent for improving the hardenability of the aqueous dispersion is added during or after formation of the aqueous dispersion.

18. Process according to claim 17, characterised in that a reaction resin, a hardener, a hardening accelerator and/or a catalyst is added as an agent for improving the hardenability of the aqueous dispersion.

19. Process according to claim 18, characterised in that a melamine resin, a urea resin, an epoxide resin or a carbamide resin is used as a reaction resin and an organic acid, optionally neutralised with ammonia or an organic amine, such as p-toluenesulphonic acid, naphthalenesulphonic acid, tartaric acid, citric acid and/or maleic acid or siccatives, partial esters of dicarboxylic acids and tricarboxylic acids are used as a catalyst.

20. Process according to one of the preceding claims, characterised in that 0 to 90% by weight, preferably 5 to 50% by weight of an alkyd melamine resin, a polyester melamine resin, an acrylate resin, an acrylic copolymer, an epoxide resin, a polyisobutylene, a polyvinylether, a polybutadiene, a butadiene/styrene copolymer, a vinylchloride copolymer, a polyacrylate, a polyethylene, of bitumen or of coal-tar pitch are added in solution or in solid form or preferably in the form of an aqueous emulsion or dispersion during or after formation of the aqueous dispersion.

21. Process according to one of the preceding claims, characterised in that 0 to 20% by weight, preferably 0.5 to 2% by weight of a blowing agent and/or a plasticiser are added during or after formation of the aqueous dispersion.

22. Process according to claim 21, characterised in that an azodicarboxylic amide compound, a sulphohydrazide compound and/or a thiatriazole compound is used as a blowing agent.

23. Process according to at least one of the preceding claims, characterised in that the aqueous dispersion is distributed on a filter sieve or filter cloth, is pre-dried and is subsequently squeezed under pressure in heat.

24. Process according to at least one of the preceding claims, characterised in that a fibre mat is impregnated with the aqueous dispersion optionally reacted with fillers, additives and/or fibres and is subsequently cured under heat and pressure.

**Revendications**

1. Procédé de fabrication de plaques ou d'articles préformés, par durcissement, sous l'effet de la chaleur et de la pression, d'une masse contenant des résines thermodurcissables formées à partir de déchets de peinture rassemblés sous forme encore réticulable, caractérisé en ce que l'on met en oeuvre, comme masse contenant des résines thermodurcissables, une dispersion aqueuse, qui a été formée à partir des déchets de peinture par addition d'agents tensioactifs et sous l'effet de forces mécaniques.

2. Procédé selon la revendication 1, caractérisé en ce que l'on utilise, comme déchets de peinture, des résidus de peinture ou des déchets ou boues de peinture partiellement déshydratés.

3. Procédé selon l'une des revendications précédentes, caractérisé en ce que l'on mélange les déchets de peinture, en agitant, avec un agent tensioactif, on ajuste le pH du mélange obtenu à 7,0-10,0, de préférence à 8,0-8,5, et on ajoute de l'eau jusqu'à une teneur en eau de 10 à 60 % en poids, de préférence de 20 à 35 % en poids, pour former une émulsion aqueuse stable.

4. Procédé selon les revendications 1 à 3, caractérisé en ce que l'on utilise, comme agent tensioactif, un agent tensioactif anionique, cationique, non ionique ou amphotère, à raison de 1 a 10 % en poids.

5. Procédé selon la revendication 4, caractérisé en ce que l'on utilise, comme agent tensioactif, 2 à 5 % en poids de nonylphénol ou octylphénol éthoxylé, comportant de 4 à 40 groupes éthoxy par molécule.

6. Procédé selon la revendication 4, caractérisé en ce que l'on utilise, comme agent tensioactif, 2 à 5 % en poids de ligninesulfonate de calcium et/ou de magnésium.

7. Procédé selon la revendication 4, caractérisé en ce que l'on utilise, comme agent tensioactif, 2 à 5 % en poids d'acides carboxyliques organiques à longue chaîne , neutralisés par de l'ammoniac ou par une amine.

8. Procédé selon la revendication 7, caractérisé en ce que l'on utilise, comme acides carboxyliques à longue chaîne , des acides gras séchant par oxydation, tels que l'acide oléique, l'acide gras de l'huile de lin, l'acide gras de l'huile de soja, l'acide gras de tall-oil, l'acide résinique ou l'acide gras de l'huile de ricin, et/ou du polybutadiène modifié avec des acides dicarboxyliques ou tricarboxyliques, qui ont été neutralisés par une solution ammoniacale, par de la monoéthanolamine ou par de la triéthanolamine.

9. Procédé selon la revendication 3, caractérisé en ce que, pour ajuster le pH, on utilise une solution aqueuse d'ammoniac, des amines organiques aliphatiques primaires, secondaires ou tertiaires, et/ou des aminoalcools.

10. Procédé selon la revendication 9, caractérisé en ce que l'on utilise, comme aminoalcools, la monoéthanolamine, la diméthyléthanolamine ou la triéthanolamine, et, comme amine organique, la triéthylamine.

11. Procédé selon l'une des revendications précédentes, caractérisé en ce que l'on ajoute, en solution aqueuse ou sous forme solide, pendant ou après la formation de la dispersion aqueuse, un stabilisant, tel que le poly(alcool vinylique), un ester de cellulose ou un éther de cellulose hydrosoluble, tel que la méthylcellulose, la carboxyméthylcellulose sodique, l'hydoxyéthylcellulose ou l'acétate de cellulose, la caséine, la polyvinylpyrrolidone et/ou un xanthate.

12. Procédé selon l'une des revendications précédentes, caractérisé en ce que l'on ajoute, pendant ou après la formation de la dispersion aqueuse, de 0 à 250 % en poids d'une charge.

13. Procédé selon la revendication 12, caractérisé en ce que l'on utilise une charge à activité antivibratoire et/ou antiphonique, à raison de 10 à 80 % en poids, de préférence de 20 à 60 % en poids.

14. Procédé selon la revendication 13, caractérisé en ce que l'on utilise, comme charge antivibratoire et/ou antiphonique, la vermiculite, le mica, l'argile expansée, la poudre de caoutchouc et/ou la mousse plastique finement divisée de taille de particules allant jusqu'à 2 mm.

15. Procédé selon l'une des revendications précédentes, caractérisé en ce que l'on ajoute, pendant ou après la formation de la dispersion aqueuse, 2 à 70 % en poids, de préférence 30 à 50 % en poids, de fibres organiques et/ou minérales, naturelles et/ou synthétiques.

16. Procédé selon la revendication 15, caractérisé en ce que l'on utilise, comme fibres organiques et/ou minérales, naturelles et/ou synthétiques, des fibres de jute, des déchets de fibres, de la laine minérale, des fibres de verre, de la farine de bois, des copeaux de bois et/ou des déchets de bois.

17. Procédé selon l'une des revendications précédentes, caractérisé en ce que l'on ajoute, pendant ou après la formation de la dispersion aqueuse, de 0,1 à 3 % en poids, de préférence de 0,5 à 1,5 % en poids, d'un agent pour améliorer l'aptitude au durcissement de la dispersion aqueuse.

18. Procédé selon la revendication 17, caractérisé en ce que l'on ajoute, comme agent pour améliorer l'aptitude au durcissement de la dispersion aqueuse, une résine réactive, un durcisseur, un accélérateur de durcissement et/ou un catalyseur.

19. Procédé selon la revendication 17, caractérisé en ce que l'on utilise, comme résine réactive, une résine de mélamine, une résine d'urée, une résine époxy ou une résine de carbamide, et, comme accélérateur de durcissement ou comme catalyseur, un acide organique éventuellement neutralisé par de l'ammoniac ou par une amine organique, tel que l'acide p-toluènesulfonique, l'acide naphtalènesulfonique, l'acide tartrique, l'acide citrique et/ou l'acide maléique, ou des siccatifs, des esters partiels d'acides dicarboxyliques et tricarboxyliques.

20. Procédé selon l'une des revendications précédentes, caractérisé en ce que l'on ajoute, pendant ou après la formation de la dispersion aqueuse, de 0 à 90 % en poids, de préférence de 5 à 50 % en poids, d'une résine alkyde-mélamine, d'une résine polyester-mélamine, d'une résine d'acrylate, d'un copolymère acrylique, d'une résine époxy, d'un polyisobutylène, d'un éther polyvinylique, d'un polybutadiène, d'un copolymère butadiène/styrène, d'un copolymère de chlorure de vinyle, d'un polyacrylate, d'un polyéthylène, de bitume ou de brai de houille, en solution ou sous forme solide ou, de préférence, sous forme d'une émulsion ou dispersion aqueuse.

21. Procédé selon l'une des revendications précédentes, caractérisé en ce que l'on ajoute, pendant ou après la formation de la dispersion aqueuse, de 0 à 20 % en poids, de préférence de 0,5 à 2 % en poids, d'un agent gonflant et/ou d'un plastifiant.

22. Procédé selon la revendication 21, caractérisé en ce que l'on ajoute, comme plastifiant, un dérivé d'azodicarbonamide, un dérivé de sulfohydrazide et/ou un composé thiatriazolique.

23. Procédé selon l'une des revendications précédentes, caractérisé en ce qu'on étale la dispersion aqueuse sur un tamis filtrant ou sur une toile filtrante, on la présèche et on la comprime ensuite à chaud et sous pression.

24. Procédé selon l'une au moins des revendications précédentes, caractérisé en ce qu'on imprègne un mat de fibres avec la dispersion aqueuse renfermant éventuellement des charges, des additifs et/ou des fibres, et on le fait ensuite durcir à chaud et sous pression.